# EUROPEAN PATENT SPECIFICATION

(11) **EP 1 715 646 B1**
(45) Date of publication and mention of the grant of the patent: **14.03.2012**
(21) Application number: 05103097.1
(22) Date of filing: 18.04.2005
(51) Int. Cl.: H04L 29/06

(54) **System and method for connecting applications to heterogeneous backend servers via a gateway server**
System und Verfahren zur Verbindung von Anwendungen an heterogene Backend-Server mittels eines Gateway-Servers
Dispositif et procédé de connexion d'applications à des serveurs finaux hétérogènes par l'entremise de serveurs de passerelle

(43) Date of publication of application: 25.10.2006
(73) Proprietor: RESEARCH IN MOTION LIMITED, Waterloo, Ontario N2L 3W8 (CA)
(72) Inventor: Bibr, Viera, L0P 1G0, Kilbride, (CA); Fritsch, Brindusa, M9C 2J9, Toronto, (CA); DeBruin, David, N1E 4E7, Guelph, (CA); Cacenco, Michael V., L6Y 4X4, Brampton (CA); Shenfield, Michael, L4C 3S9, Richmond Hill, (CA); Pechersky, Leo, N2L 3L3, Waterloo (CA)
(74) Representative: Patel, Binesh

(56) References cited:
- WO-A-2004/059939
- HOANG PHAM HUY ET AL: "Web service gateway - a step forward to e-business" WEB SERVICES, 2004. PROCEEDINGS. IEEE INTERNATIONAL CONFERENCE ON SAN DIEGO, CA, USA 6-9 JULY 2004, PISCATAWAY, NJ, USA,IEEE, 6 July 2004 (2004-07-06), pages 648-655, XP010709191 ISBN: 0-7695-2167-3
- CURBERA F ET AL: "Unraveling the Web services web: an introduction to SOAP, WSDL, and UDDI" IEEE INTERNET COMPUTING, IEEE SERVICE CENTER, PISCATAWAY, NJ, US, vol. 6, no. 2, 2002, pages 86-93, XP002257200 ISSN: 1089-7801
- CHRISTIAN WEGE: "Step out of integration hell- Protocol Interception Wrapper", INTERNET ARTICLE, [Online] 4 July 2001 (2001-07-04), - 8 July 2001 (2001-07-08), pages 1-4, XP000863931, EuroPLoP 2001 Retrieved from the Internet: URL:http://www.hillside.net/patterns/EuroP LoP2001/> [retrieved on 2008-11-04]
- GRUSER J.; RASCHID L.; VIDAL M.; BRIGHT L.: "Wrapper Generation for Web Accessible Data Source", INTERNET ARTICLE, [Online] - 1998, pages 14-28, XP000863930, PROCEEDING OF CONFERENCE ON COOPERATIVE INFORMATION SYSTEMS Retrieved from the Internet: URL:ftp://ftp.umiacs.umd.edu/pub/louiqa/BA A9709/PUB98/1CoopIS98.pdf> [retrieved on 2008-11-04]

## Description

This application relates generally to apparatuses and a method for facilitating communication between a wireless application and a backend server via a gateway server and specifically for facilitating communication with heterogeneous backend servers.

Due to the proliferation of wireless networks, there are a continually increasing number of wireless devices in use today. These devices include mobile telephones, personal digital assistance (PDAs) with wireless communication capabilities, two-way pagers and the like. Concurrently with the increase of available wireless devices, software applications running on such devices have increased their utility. For example, the wireless device may include an application that retrieves a weather report for a list of desired cities or an application that allows a user to shop for groceries. These software applications take advantage of the ability to transmit data of the wireless network in order to provide timely and useful services to users, often in addition to voice communication. However, due to a plethora of different types of devices, restricted resources of some devices, and complexity of delivering large amounts of data to the devices, developing software applications remains a difficult and time-consuming task.

Currently, devices are configured to communicate with Web Services through Internet based Browsers and/or native applications. Browsers have the advantage of being adaptable to operate on a cross-platform basis for a variety of different devices, but have a disadvantage of requesting pages (screen definitions in HTML) from the Web Service, which hinders the persistence of data contained in the screens. A further disadvantage of Browsers is that the screens are rendered at runtime, which can be resource intensive. Applications for browsers are efficient tools for designing platform independent applications. Accordingly, different runtime environments, regardless of the platform, execute the same application. However, since different wireless devices have different capabilities and form factors, the application may not be executed or displayed as desired. Further, browser based application often require significant transfer bandwidth to operate efficiently, which may be costly or even unavailable for some wireless devices. Also, browsers offer very limited functionality without a live over the air (OTA) connection.

On the other hand, native applications are developed for a specific wireless device platform, thereby providing a relatively optimized application program for a runtime environment running on that platform. Such an application would allow organization and persistence of data collections in an optimized form on the device, which would be available even when the device is off-air. However, a platform dependent application introduces several drawbacks, including having to develop multiple versions of the same application and being relatively large in size, thereby taxing memory resources of the wireless device. Further, application developers need experience with programming languages such as Java and C++ to construct such native applications.

Further, applications are currently designed to communicate with Web Services. However, more frequently other types of backend servers are being made available to the applications. In order to expose these backend servers to the applications, Web Service are developed to interface with the backend servers.

Communication with the Web Service is typically achieved via Simple Object Access Protocol (SOAP). However, SOAP is big and complication without offering much in the way of service. Also, adding a Web Service solely as an interface to the backend server adds unnecessary complexity to the system and may limit its functionality. Yet further, it is preferable to be able to provide extensibility to different backend servers without having to have intimate a priori knowledge of the details of the backend server.

Accordingly there is a need for a system to facilitate providing a system and method for accessing a plurality of different backend servers in order to overcome some of the disadvantages of the prior art.

In accordance with one aspect of the present invention a connector is provided for facilitating delivery of a message received from an application to one of a plurality of heterogeneous backend servers via a gateway server, the message being defined in a schema-based description document in accordance with a set of predefined criteria specific to the connector. The connector comprises of: a processor for encapsulating the message in accordance with a binding protocol defined by the schema-based description document; and a transceiver for transmitting the message in accordance a connection protocol defined by with the schema-based description document.

On the other hand, native applications are developed for a specific wireless device platform, thereby providing a relatively optimized application program for a runtime environment running on that platform. Such an application would allow organization and persistence of data collections in an optimized form on the device, which would be available even when the device is off-air. However, a platform dependent application introduces several drawbacks, including having to develop multiple versions of the same application and being relatively large in size, thereby taxing memory resources of the wireless device. Further, application developers need experience with programming languages such as Java and C++ to construct such native applications.

Further, applications are currently designed to communicate with Web Services. However, more frequently other types of backend servers are being made available to the applications. In order to expose these backend servers to the applications, Web Service are developed to interface with the backend servers.

Communication with the Web Service is typically achieved via Simple Object Access Protocol (SOAP). However, SOAP is big and complication without offering much in the way of service. Also, adding a Web Service solely as an interface to the backend server adds unnecessary complexity to the system and may limit its functionality. Yet further, it is preferable to be able to provide extensibility to different backend servers without having to have intimate a priori knowledge of the details of the backend server.

Further details of the SOAP protocol, Web Services Description Language (WSDL) and the Universal Description, Discovery and Integration directory are discussed in Curbera F et al: "Unraveling the Web services web an introduction to SOAP, WSDL and UDDI" IEEE Internet Computing, IEEE Service Center, Piscataway, NJ, US, vol. 6,no.2,2002, pages 86-93, ISBN 1089-7801.

Hoang Pham Huy et al;"Web service gateway - a step forward to e-business" Proceedings IEEE International Conference on Web services 2004, San Diego, Ca, USA 6-9 July 2004, Piscataway, NJ, USA, IEEE, pages 648-655, ISBN:0-7695-2167-3 discloses a prior art Web Services gateway mechanism in which existing websites are wrapped by several Web Services wrappers. This enables services to inherit features from other sites and for the services to be enriched with other Web Service features like UDDI publishing and semantic describing.

There is a need for a system to facilitate providing a system and method for accessing a plurality of different backend servers in order to overcome some of the disadvantages of the prior art.

In accordance with one aspect of the present invention there is provided a connector configured to deliver a message received at a gateway server from an application executing on a wireless device to one of a plurality of heterogeneous backend servers, delivery requirements for the message being defined in a schema-based description document in accordance with a set of predefined criteria specific to the connector in accordance with claim 1.

In accordance with another aspect of the present invention there is provided a gateway server configured to facilitate delivery of a message received from an application executing on a wireless device to one of a plurality of heterogeneous backend servers, the message being defined in a schema-based description document in accordance with a set of predefined criteria in accordance with claim 4.

In accordance with a further aspect of the present invention there is provided a method of facilitating delivery of a message from an application executing on a wireless device to one of a plurality of heterogeneous backend servers via a connector at a gateway server, the message being defined in a schema-based description document in accordance with a set of predefined criteria specific to the connector in accordance with claim 9.

### BRIEF DESCRIPTION OF THE DRAWINGS

An embodiment of the invention will now be described by way of example only with reference to the following drawings in which:
Figure 1 is a block diagram of a network facilitating wireless component applications;
Figure 2 is a detailed block diagram of the application gateway shown in figure 1;
Figure 3 is a block diagram of a message listening application
Figure 4 is a block diagram of a connector subsystem;

### DETAILED DESCRIPTION OF THE PREFERRED EMBODIMENT

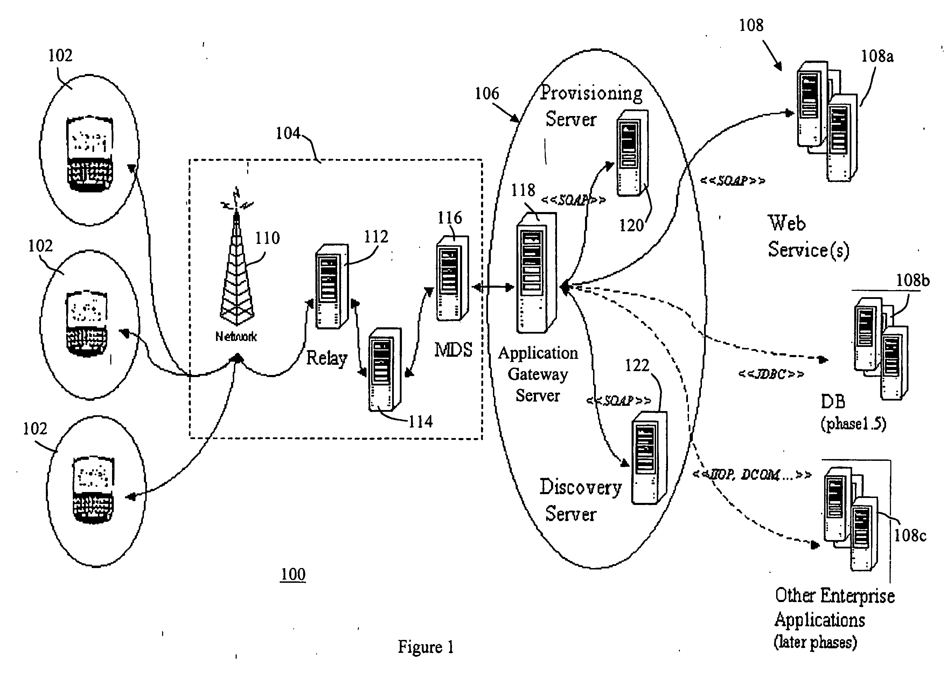

For convenience, like numerals in the description refer to like structures in the drawings. Referring to Figure 1, a communication infrastructure is illustrated generally by numeral 100. The communication infrastructure 100 comprises a plurality of communication devices 102, or simply devices 102, a communication network 104, an application gateway 106, an application development environment 107 and a plurality of backend servers 108.

The devices 102 include both wired and wireless computing devices such as a desktop computer, a laptop or other portable computer, a smart phone, a personal digital assistant (PDA), and the like. The devices 102 are in communication with the application gateway 106 via the communication network 104. Accordingly, the communication network 104 may include several components such as a wireless network 110, a relay 112, a corporate server 114 and/or a mobile data server 116 for relaying data between the devices 102 and the application gateway 106.

The application gateway 106 comprises a gateway server 118 a provisioning server 120 and a discovery server 122. The gateway server 118 is in communication with both the provisioning server 120 and the discovery server 122. The gateway server 110 is further in communication with a plurality of the backend servers 108, such as web services 108a, database services 108b, as well as other enterprise services 108c, via a suitable link. For example, the gateway server 110 is connected with the web services 108a and database services 108b via Simple Object Access Protocol (SOAP) and Java Database Connectivity (JDBC) respectively. Other types of backend servers 108 and their corresponding links will be apparent to a person of ordinary skill in the art. Accordingly, it can be seen that the gateway server 118 acts as a message broker between the devices 102 and the backend servers 108.

Each wireless device 102 is initially provisioned with a service book establishing various protocols and settings, including connectivity information for the corporate server 114 and/or the mobile data server 116. These parameters may include a Uniform Resource Locator (URL) for the application gateway server 118 as well as its encryption key. Alternately, if the wireless device 102 is not initially provisioned with the URL and encryption key, they may be pushed to the wireless device 102 via the mobile data server 116. The mobile device 102 can then connect with the application gateway 106 via the URL of the application gateway server 118.

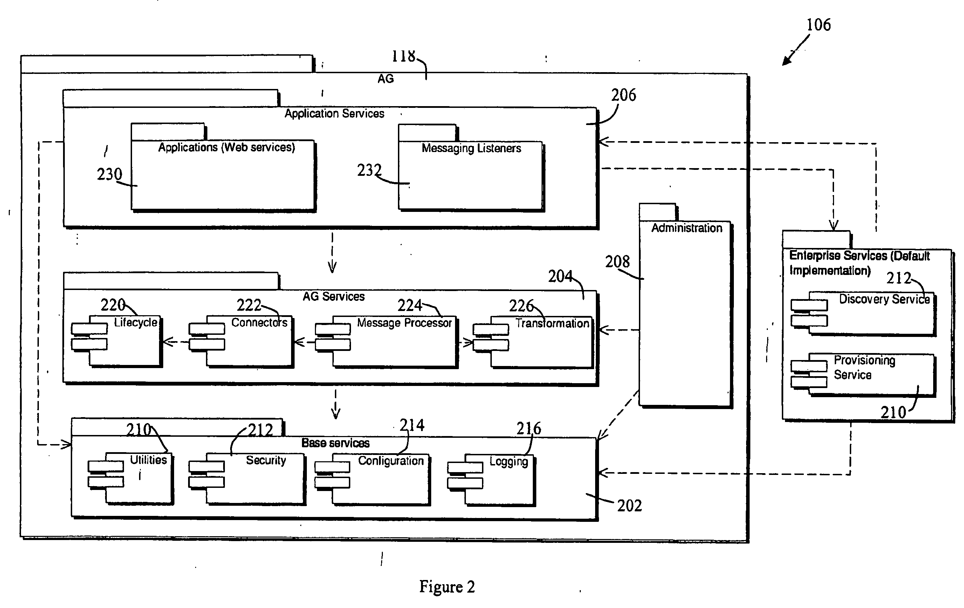

Referring to Figure 2, a more detailed view of the application gateway 106 is shown. The application gateway server 118 includes three layers of service; a base services layer 202, an application gateway services layer 204 and an application services layer 206. The application gateway server 118 further includes an administration service 208.

A provisioning service 210 and a discovery service 212 are provided by the provisioning server 120 and discovery server 120, respectively.

At the lowest level, the base services layer 202 offers basic, domain independent system services to other components in higher levels. Thus, for example, all subsystems in the application gateway services layer 204 and the application services layer 206 can utilize and collaborate with the subsystems in the base services layer 202. In the present embodiment, the base services layer 202 includes a utilities subsystem 210, a security subsystem 212, a configuration subsystem 214, and a logging subsystem 216.

The application gateway services layer 204 provides wireless component application domain specific services. These services provide efficient message transformation and delivery to backend systems 108 and provide wireless device 102 and component application lifecycle management. In the present embodiment, the application gateway services layer 204 includes a lifecycle subsystem 220, a connector subsystem 222, a messaging subsystem 224, and a transformation subsystem 226.

The application services layer 206 sits at the top of the architecture and provides external program interfaces and user interfaces using subsystems provided by the lower layers. For example, various applications such as a service provider lifecycle application, a packaging application and a message listening application provide external program interfaces since they communicate primarily with applications on external systems. Similarly, an administration application provides a user interface by providing a user with ability to access and potentially modify application gateway data and/or parameters.

The administration service 208 is responsible for administrative system messages, administration of the wireless devices 102, runtime administration of the application gateway subsystems, support and display system diagnostics, and administration of default implementations of the provisioning and discovery services. Relevant portions of the application gateway are described in details as follows.

### Messaging Listening Application

The messaging listening application provides an interface for receiving messages from the devices 102 as well as external sources and forwarding them to the messaging subsystem. Further, the message listening application typically authenticates that the source of the message is valid.

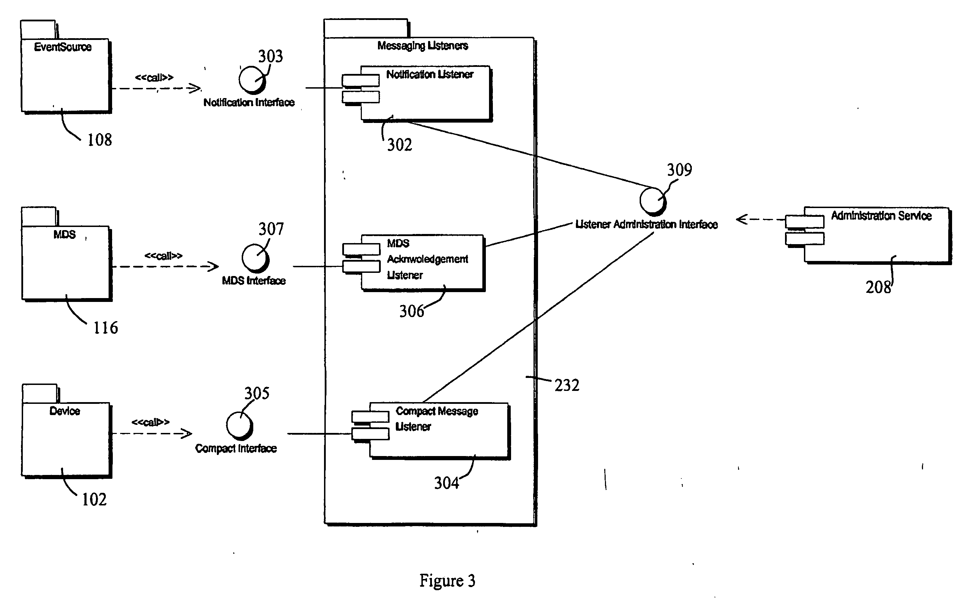

Referring to Figure 3, the message listening application is shown in greater detail. The message listening application includes several listeners; a notification listener 302, a compact message listener 304, and a mobile data service acknowledgement listener 306. The notification listener 302 receives notification and response messages from event sources 108c via a notification interface 303.

For example, the notification interface 303 may be implemented using Web Service (WS) Eventing. Web services often want to receive messages when events occur in other services, such as the event sources, and applications. A mechanism for registering interest is provided in the art by such standards as WS-Eventing and/or WS Subscription. These standards define a protocol for an application, referred to as a subscriber, to register interest in data offered by a standard compliant Web service, referred to as an Event Source for receiving messages about events, referred to as notifications. When the event source notifies the subscriber of an event, it is referred to as Notification.

The compact message listener 304 receives messages from the devices 102 via a compact message interface 305. The mobile data service acknowledgment listener 306 receives and acknowledges notifications from the mobile data service 116 via a mobile data service interface 307. Each of the listeners 302, 304 and 306 receive administrative messages from the administration service 208 via a listener administrative interface 311.

In the present embodiment the listener interfaces 303, 305, 307 and 311 are configured using Hypertext Transfer Protocol/Hypertext Transfer Protocol over Secure Socket Layer (HTTP/HTTPS). However, it will be appreciated by a person skilled in the art that these protocols have been selected as a design choice and other protocols may be used when desired. Accordingly, external systems transmit a HTTP/HTTPS request, which is received by the appropriate listener. The listener takes the message, makes minimal transformations, and forwards it to the messaging subsystem 224. The transformations include copying HTTP header information into message object fields. For example, the HTTP header information may identify the mobile data service 116 and wireless device 102 from which the message originated.

As previously described, the message listening application authenticates that the source of the message is valid, be it the mobile date service 116, the wireless device 102 or event source 108. Further, if reliable messaging is required, service availability is ensured and the listeners deal with availability attack solutions. In order to facilitate this, the messaging subsystem defines a threshold for a maximum number of messages and connections for a given time period from any backend server 108, component application or device 102. The administrator can modify this threshold as desired, as well as allow for specific exceptions via the administration service 208.

Further, since message interception and replay attack is possible, the listeners detect and prohibit this attack using mechanisms that identify replayed messages. These mechanisms typically include the use of a nonce. A nonce is defined as parameter that varies with time. A nonce can be a timestamp or other special marker intended to limit or prevent the unauthorized replay or reproduction of a message. Because a nonce changes with time, it can be used to determine whether or not a message is original, or a replay or reproduction of the original message. The use of a nonce for preventing interception and replay attacks is known in the art and need not be described in detail, as standard implementations are utilized.

Further, other technologies, such as sequencing, can also be used to prevent replay of application messages in addition to, or in lieu of, the time timestamp technique. Once again, such techniques are known in the art and need not be described in detail, as standard implementations are utilized.

### Connectors Subsystem

The connector subsystem 222 provides transport services between the application gateway 106 and external destination systems using the required transport protocols. Further, the connector subsystem 222 receives synchronous responses from destination systems, and passes them to the message subsystem 224 for processing.

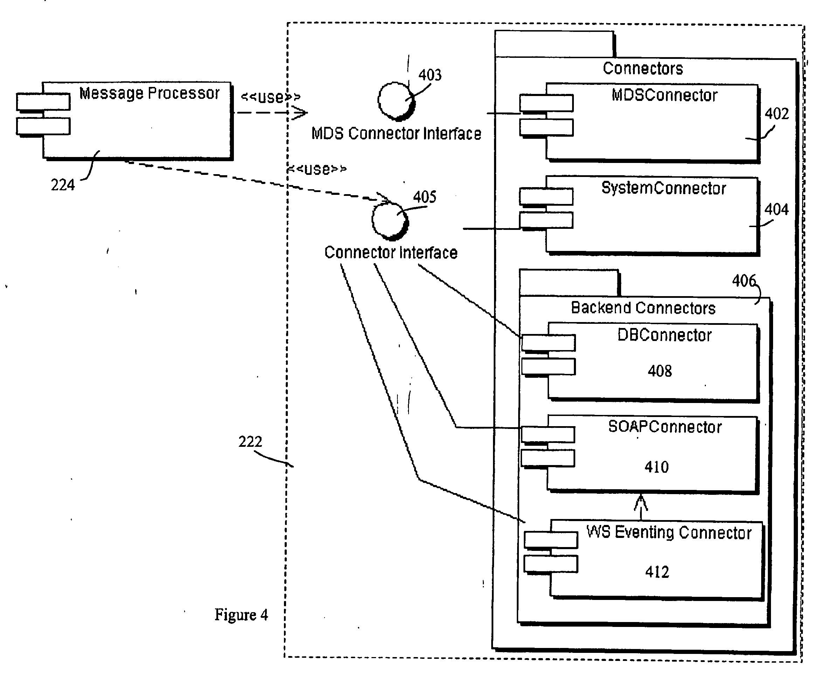

Referring to Figure 4, a more detailed view of the connector subsystem 222 is shown. The connector subsystem 222 includes a MDS connector 402, a system connector 404 and a set of backend connectors 406. The MDS connector 402 is coupled with the message subsystem 224 via a MDS connector interface 403. The system connector 404 and backend connectors 406 are coupled with the message subsystem 224 via a connector interface 405.

The MDS connector interface 403 is an Application Program Interface (API} for message delivery to the devices 102 in the compact message format. The connector interface 405 is an API for message delivery to internal subsystems or backend systems.
In the present embodiment, both APIs are implemented using Java.

The MDS connector 402 delivers compact messages to the wireless device via the MDS 116. The MDS connector 402 works as push initiator to push messages to devices 102. In the present embodiment the MDS connector 402 supports basic push as well as the reliable push to MDS through the Wireless Application Protocol (WAP) to Push (PAP) standard protocol, although other standards can be supported as they are developed.

The system connector 402 delivers system messages to the lifecycle subsystem 220, the administration subsystem 208, or the messaging subsystem 224. Delivery of system messages to any of the specified subsystems is performed by direct API calls. The system connector receives the messages in the internal message format and performs Java API calls to the appropriate subsystem.

The messages communicated between the message processor 224 and the connector interface 405 are in an internal message format. In the present embodiment, the internal message format may be, for example, DOM or any other tree data structure. The connector interface 405 transmits the message to an associated one of the backend connectors 806. The backend connector 806 encapsulates the message into the required format and opens a connection with a target backend server 106.

WSDL is a document written in XML for describing a web service. A WSDL document specifies the location of the web service and the operations the web service exposes. Accordingly, it can be seen that WSDL provides a way to group messages into operations and operations into interfaces. It also provides a way to define bindings for each interface and protocol combination along with the endpoint address for each one. A complete WSDL definition includes all of the information used to invoke a web service. Developers that want to make it easy for others to access their web services publish their WSDL definitions.

A WSDL document defines a web service using major elements including type, message, portType, binding and service. The first three elements (types, message, and portType) are all abstract definitions of a web service interface. These elements constitute the programmatic interface that is typically interfaced with code. The last two elements (binding and service) describe the concrete details of how the abstract interface maps to messages on the wire. These details are typically handled by the underlying infrastructure.

The type element defines the data type that is used by the web service. For platform neutrality, WSDL uses XML Schema syntax to define data types. The type definitions are referenced from higher-level message definitions in order to define the structural details of a message.

The message element defines the data elements of an operation. Each message can consist of one or more parts. The parts can be compared to the parameters of a function call in a traditional programming language. A sample WSDL message element is provided below as Example 1.

```
 <message name="getTermRequest">
      <part name="term" type="xs:string"/>
 </message>

 <message name="getTermResponse">
      <part name="value" type="xsatring"/>
 </message>
```

### Example 1

In Example 1, a sample WSDL portion defining two messages is provided. A first message, named 'getTermRequest', is defined as having a parameter named 'term' which is of the type string. A second message, named 'getTermResponse', is defined as having a parameter named 'value' which of the type string.

The portType element defines a group of operations also known as an interface in most environments, so this element is also referred to as the interface element. Accordingly, the portType element correlates a web service with the operations that can be performed and the messages that are involved. A sample WSDL portType element is provided below as Example 2.

```
 <portType name="glossaryTerms">
      <operation name="getTerm">
             <input message=" getTermRequest"/>
             <output message=" getTermResponse"/>
      </operation>
 </portType>
```

### Example 2

-In Example 2, the sample WSDL portion is provided for defining a portType element using the messages defined in Example 1. The portType element in Example 2 is named 'glossaryTerms'. The portType element includes an operation element for defining an operation of the web service. Although it is possible to have multiple operation elements for each portType element, the present example shows only one for ease of explanation. The operation element is name 'getTerm' and it uses the message 'getTermRequest' as its input and provides the message 'getTermResponse' as its output.

The binding element describes the concrete details of using a particular portType element with a given transport protocol. The binding element specifies which portType element it's describing through a type attribute. A sample WSDL binding element is provided below as Example 3.

```
 <binding type="glossaryTerms" name="b1">
 <soap:binding style="document" transport="http://schemas.xmlsoap.org/soap/http" />
      <operation>
             <soap:operation
              soapAction="http://example.com/getTerm"/>
              <input>
                     <soap:body use="literal"/>
             </input>
             <output>
                     <soap:body use="literal"/>
             </output>
      </operation>
 </binding>
```

### Example 3

In Example 3, the sample WSDL portion is provided for defining a binding element using the portType element defined in Example 2. Through its type attribute, the binding element specifies that it is describing the 'glossaryTerms' portType. The soap:binding element indicates that the message data will be bound using SOAP. The style of the service for the binding is 'document', as opposed RPC, and the transport protocol 'http'. The soap:operation element defines an HTTP header value for each operation. The soap:body element defines how message parts appear inside of the SOAP body element. In the present embodiment, the message parts appear as 'literal', although they may also appear encoded.

The service element defines a collection of ports, or endpoints, that expose a particular binding. Each of the ports is assigned a name and a binding. A sample WSDL service element is provided below as Example 4.

```
 <service name="termService">
      <port name="termEndpoint" binding="b1">
              <soap:address
         - location="http://localhost/getTerm/getTerm.asmx"/>
      </port>
 </service>
```

### Example 4

In Example 4, the sample WSDL portion is provided for defining a service element for exposing the binding element defined in Example 3. In the present example, the binding 'b1' is to the address "http://localhost/getTerm/getTerm.asmx". Accordingly, the service element defines a web service destination and the binding element defines the transport protocol for communicating with the web service at destination.

From the above, it will be appreciated that there are four types of communication that can be established between the application gateway and a backend server, including one-way communication, request response communication, solicit response communication and notification communication. Of the four, the request-response communication is typically the most common operation type.

For one-way communication, the web service receives a message but does not return a response. For request-response communication, the web-service receives a request and returns a response. For solicit-response communication, the web service sends a request and waits for a response. For notification communication, the web service sends a message but does not wait for a response.

Accordingly, for the WSDL document described above, the messaging subsystem 224 receives a message named 'getTermRequest' and parses a message mapping. The message mapping correlates the message with the 'glossaryTerms' portType.
Accordingly, the message is transmitted to the connector interface 405, which interfaces with the SOAP connector 410 in accordance with the 'glossary Terms' portType.
Although the present embodiment includes message and portType elements for defining and identifying message so they can be mapped, it will be appreciated by a person of ordinary skill in the art that other methods of identifying and mapping messages may be implemented.

The SOAP connector 410 encapsulates the message in accordance with the SOAP 1.1 transport protocol, using header and body definitions as provided by the binding element of the WSDL document. The SOAP connector 410 further opens a HTTP connection with http://localhost/getTerm/getTerm.asmx, as defined by the WSDL document. Once the connection is established, the SOAP connector 410 transmits the encapsulated 'getTermRequest' message to the web service and waits for the reply message. Once the reply message is received, the SOAP connector 410 retrieves the relevant data from the encapsulated SOAP response in accordance with the WSDL definition for the response message 'getTermResponse', which transmitted to the messaging subsystem 224 for delivery to the device 102.

However, the service as described above is provided exclusively for web services. Accordingly, the backend connectors 406 include connectors capable of interpreting extended WSDL in order to facilitate communication with non-web service back ends. Such a connector provides the advantage of not having to provide web services that are designed solely to act as an interface between a gateway server and a backend server.

WSDL inherently provides extensibility that allows for customization of WSDL documents: Accordingly WSDL extensibility in both the binding element and the service element is used to facilitate communication with non-web service backend servers. The WSDL binding and service definitions are shown below in Example 5.
WSDL Binding Definition:

```
 <wsdl:binding name="nmtoken" type="qname">*
      <wsdl:documentation .... />?
      <-- extensibility element --> *
      <wsdl:operation name="nmtoken">*
             <wsdl:documentation .... /> ?
             <-- extensibility element --> *
             <wsdl:input> ?
                     <wsdl:documentation .... /> ?
                     <-- extensibility element -->
             </wsdl:input>
             <wsdl:output> ?
                     <wsdl:documentation .... /> ?
                     <-- extensibility element --> *
  - </wsdl:output>
             <wsdl:fault name="nmtoken"> *
                     <wsdl:documentation .... /> ?
                     <-- extensibility element --> *
             </wsdl:fault>
      </wsdl:operation>
 </wsdl:binding>
```

WSDL Binding Definition:

```
<wsdl:service name="nmtoken"> *
      <wsdl:documentation .... />?
      <wsdl:port name="nmtoken" binding="qname"> *
             <wsdl:documentation .... /> ?
             <-- extensibility element -->
      </wsdl:port>
      <-- extensibility element -->
 </wsdl:service>
```

### Example 5

The three specific WSDL extensibility elements that were manipulated in the present embodiment are highlighted in bold type. These extensibility elements include those for the input and output elements of the binding element as well as the extensibility element for the port element of the service element. The data structure of these extensibility elements as well as the systems and methods for implementing them are described below.

An example of a binding element implementation illustrating how WSDL is extended to support access to a backend server comprising a relational database is show below in Example 6.

```
<wsdl:binding name="personnelAvailableBinding" type="impl:workOrdersDbPort">
     <wsdl:operation name="getAllWorkOrders">
             <wsdl:input name="sql">
                     <wica:params name="ordered"/>
                     <wica:sql type="select">
                             <![CDATA[select ASSIGNED_TIME, ASSIGNED_TO,
                             CLIENT_DETAILS, COMPLETED_TIME,
                             CREATED_TIME, ID, JOB_TYPE, NOTES, PRIORITY,
                             STARTED_TIME, STATUS
                             from orders
                             where PERSONNEL_NAME=?]]>
                     </wica:sql>
             </wsdl:input>
             <wsdl:output>
                     <wica:params name="ordered"/>
             </wsdl:output>
     </wsdl:operation>
 </wsdl:binding> -
```

### Example 6

Similarly to the binding element described in Example 3, the binding element in the present example includes binding name and type attributes. The type attribute 'workOrdersDbPort' identifies the portType to which the binding element corresponds. The input element identifies an input name 'sql'.

The extensibility element of the input is prefaced by the prefix 'wica'. This prefix indicates that the element is not a standard WSDL element and is, otherwise, of little significance as will be appreciated by a person of ordinary skill in the art. The first extensibility element is a params element named 'ordered'. The params element is defined to indicate how the parameters are to be interpreted. In the present example, the parameters are ordered.

A sql element is also provided for defining a Structured Query Language (SQL) statement to be submitted to the relational database. The sql element is of type 'select', which indicates that the SQL statement is a select statement. The sql element further includes a CDATA statement, which explicitly identifies the SQL statement to be executed against the relational database. A CDATA statement is used since the information contained therein is not parsed by an XML parser.

An example of a service element implementation illustrating how WSDL is extended to support access to a backend server comprising a relational database is show below in Example 7.

```
 <wsdl:service name="workOrdersDbService">
      <wsdl:port name="personnelAvailableIF"
      binding="personnelAvailableBinding">
 - - <wica:dbconnector user="admin" password="asdf1234"
                     url="jdbc:microsoft:sqlserver://bambi: 133">
                     <property key="DatabaseName" value="agdb"/>
                     <property key="selectMethod" value="cursor"/>
             </wica:dbconnector>
 - </wsdl:port>
 </wsdl:service>
```

### Example 7

Similar to the sample service element in Example 4, the service is provided with a port name and a corresponding binding. In Example 7, the port name 'personnelAvailableIF' exposes the binding element 'personnelAvailableBinding' defined in Example 6.

The extensibility element of the port is prefaced by the prefix 'wica'. Similarly to Example 6, this prefix indicates that the element is not a standard WSDL element. The extensibility element is used to define a connection to a backend server. The extensibility element indicates that the connection is for a database server by using element 'dbconnector'.

The user name, password and uniform resource locator (URL) for locating and accessing the database are included as pre-programmed parameters of the 'dbconnector' element. The URL for the database server includes a communication protocol 'jdbc', a vendor 'microsoft', a driver 'sqlserver', a server '//bambi' and a port number '1433'.

The dbconnector element also includes a pair of property keys, 'DatabaseName' and 'selectMethod', and associated values. The property key 'DatabaseName' identifies the name of the database to be accessed on the database server. The property key 'selectMethod' identifies the type of object into which the query result is placed.

The remaining WSDL documentation for the JDBC example typically also includes message and portType elements as shown is Example 8. However, it will be appreciated by a person of ordinary skill in the art that there need not be anything added to these elements in order to facilitate accessing heterogeneous backend servers.

```
 <message name="PersonnelAvailableRequest">
      <part name="term" type="xs:string"/>
 </message>

 <message name="PersonnelAvailableResponse">
      <part name="value" type="xs:string"/>
 </message>

 <portType name="workOrdersDbPort">
      <operation name="getPersonnel">
             <input message="PersonnelAvailableRequest"/>
             <output message="PersonnelAvailableResponse"/>
      </operation>
 </portType>
```

### Example 8

Accordingly, for the WSDL document described above, the messaging subsystem 224 receives a message named 'PersonnelAvailableRequest' and parses a message mapping. The message mapping correlates the message with the 'workOrdersDbPort' portType. Accordingly, the message is transmitted to the connector interface 405, which interfaces with the JDBC connector 408 in accordance with the 'workOrdersDbPort' portType. Similarly to the previous embodiment, although message and portType elements are provided for defining and identifying message so they can be mapped, a person of ordinary skill in the art will appreciated that other methods of identifying and mapping messages may be implemented.

The JDBC connector encapsulates the message in accordance with the associated binding element. In the present example, binding element defines a select SQL statement for selecting a number of predefined fields from a database named 'orders' for a given predetermined field. Specifically, for a given PERSONNEL_NAME, the remaining database fields are retrieved. The SQL statement defines a where clause for PERSONNEL_NAME, with a target of the where clause left as a variable, or '?'. Accordingly, the corresponding input message includes the target of the where clause.
The JDBC connector, therefore, encapsulates the message for submission to the relational database by completing the SQL statement and replacing the '?' with the target data from the input message. The completed SQL statement is ready to be submitted to the relational database.

The JDBC connector proceeds to open a connection to the appropriate backend server in accordance with the service element. The service element defines the location, user and password information of the relational database. Once the JDBC connector has established a connection, it transmits the encapsulated SQL query and waits for a response. Once the reply message is received, the JDBC Connector 408 retrieves the relevant data from the encapsulated response in accordance with the WSDL definition. The retrieved data is formatted in accordance with the response message 'PersonnelAvailableResponse', which is transmitted to the messaging subsystem 224 for delivery to the device 102.

Thus it can be seen that the service element described in Example 7 exposes the binding described in Example 6. Further, if other inputs and/or operations are added to the binding described in Example 6, they too will be exposed by the service element. Yet further, it is possible to expose other types of backend servers to the application gateway by providing a corresponding connector and defining the WSDL extensions for use therewith. Therefore, the system described above allows the connection with heterogeneous backend servers on an application or even message basis, which can provide flexibility for application designers.

Accordingly, it will be appreciated that the JDBC connector is programmed with the knowledge of the extensibility elements for the binding and service elements. The JDBC connector is, therefore, capable of interpreting the binding element to encapsulate the incoming message and interpreting the service element to connect to the relational database. Therefore, as long as an application developer knows the available extensibility elements and how the connector implements them, they can be used to enhance the application to provide connectivity to the backend server. As long as a connecter is provided for a corresponding backend server, the application developer can develop an application that communicates with that backend server.

Further, although the previous example relates specifically to a relational database server as the backend server, a person skilled in the art will appreciate that the system can be applied to any backend server for which a connector can be developed.

As previously described, those developers that want to make it easy for others to access their web services publish their WSDL definitions. However, this may be a problem with the embodiment as described above. For example, in the JDBC example provided, the user's credentials, such as user name and password, are included as part of the WSDL definition. Similarly, the target URL of the database is also part of the WSDL definition. As such, this information may be subject to publication. For obvious reasons, it is often preferable that such information not be published.

Accordingly, in the present embodiment a Rational Application Developer (RAD) tool plug-in creates a WSDL file to be published that does not include potential sensitive information. In its stead are dummy markers. The plug-in further creates a corresponding XML document (service-descriptor) that is not published, and includes the sensitive information left out of the published WSDL file. When the application is installed on the application gateway, both the WSDL file and the service-descriptor are retrieved from the application bundle, which was (optionally) signed and safely stored until its use in an application repository and registry. A merge processor retrieves the data from the service-descriptor and overwrites in memory the corresponding dummy markers in the WSDL file, so that once loaded on the application gateway, the WSDL file includes all necessary information. Thus, the present embodiment limits concerns of published potentially sensitive information.

Yet further, although the present embodiment has been described with reference to WSDL, the invention need not be limited using WSDL. A person skilled in the art will appreciate that WSDL provides a way to group messages into operations and operations into interfaces. It also provides a way to define bindings for each interface and protocol combination along with the endpoint address for each one. Thus, the WSDL document effectively decouples the messages for communicating with a backend server from the connectivity information required to make the connection. Accordingly, other structured schema-based languages that provide similar functionality to WSDL may be used, as desired.

Accordingly, the system described above provides a solution for enabling connectivity to heterogeneous backend servers to support wireless applications, thus keeping the existing infrastructure intact while allowing a third party to extend connectivity to different backend servers as they become available.

## Claims

1. A connector configured to deliver a message received at a gateway server (118) from an application executing on a wireless device (102) to one of a plurality of heterogeneous backend servers (108), delivery requirements for the message being defined in a schema-based description document defined in accordance with the Web Services Definition Language WSDL and in accordance with a set of predefined criteria specific to the connector, the connector comprising:
a backend connector (406)_responsive to receipt of a message to encapsulate the message in accordance with a binding protocol defined by the schema-based description document using extensibility of the WSDL binding element by replacing a place holder in the schema with data from the received message; and
a transceiver configured to transmit the encapsulated message to the backend server (108) in accordance with a connection protocol defined by the schema-based description document.
wherein the backend server (108) is a relational database and the WSDL binding element includes an extensibility element defining a partial query containing a placeholder which is completed by replacing the placer holder with data from the message.

2. The connector of claim 1, wherein the connection protocol is defined using extensibility of the WSDL service element.

3. The connector of claim 2, wherein the WSDL service element includes an extensibility element defining connection criteria for connecting the connector to the relational database in order to submit the query.

4. A gateway server (118) configured to facilitate delivery of a message received from an application executing on a wireless device (102) to one of a plurality of heterogeneous backend servers (108), the message being defined in a schema-based description document defined in accordance with the Web Services Definition Language WSDL, and in accordance with a set of predefined criteria, the gateway server (118) comprising:
a message interface (232) configured to receive messages from and transmit messages to the application; and
a connector (222) for communicating with the backend server (108), the connector comprising:
a backend connector (406) responsive to receipt of a message to encapsulate the message in accordance with a binding protocol defined by the schema-based description document using extensibility of the WSDL binding element, by replacing a place holder in the schema with target data from the received message wherein the predefined criteria are specific to the connector; and
a transceiver configured to transmit the encapsulated message to the backend server (108) in accordance with a connection protocol defined by the schema-based description document.
wherein the backend server (108) is a relational database and the WSDL binding element includes an extensibility element defining a partial query containing a placeholder which is completed by replacing the placer holder with data from the message.

5. The gateway server (118) of claim 4, wherein the connection protocol is defined using extensibility of the WSDL service element.

6. The gateway server (118) of claim 5, wherein the WSDL service element includes an extensibility element defining connection criteria for connecting the gateway server (118) to the relational database in order to submit the query.

7. The gateway server (118) of any one of claims 4 to 6, wherein the schema-based description document is publicly available before implementation on the gateway server (118) and potentially sensitive data is separate from the schema-based description document and maintained as private.

8. The gateway server (118) of claim 7, further comprising a merge processor for merging the potentially sensitive data with the publicly available schema-based description document for execution on the gateway server (118).

9. A method of facilitating delivery of a message from an application executing on a wireless device (102) to one of a plurality of heterogeneous backend servers (108) via a connector at a gateway server (118), the message being defined in a schema-based description document defined in accordance with the Web Services Definition Langualge WSDL and in accordance with a set of predefined criteria specific to the connector; the method comprising the steps of:
encapsulating the message in accordance with a binding protocol defined by the schema-based description document using extensibility of the WSDL binding element by replacing a place holder in the schema with target data from the received message; and
transmitting the encapsulated message in accordance with a connection protocol defined by the schema-based description document.
wherein the backend server (108) is a relational database and the WSDL binding element includes an extensibility element defining a partial query containing a placeholder which is completed by replacing the placer holder with data from the message.

10. A computer program product for facilitating communication between a wireless application and a backend server (108), the computer program product comprising program code executable by a processor of a computer device, system or apparatus for implementing the method of claim 9.

11. A communication infrastructure comprising at least one computing device (102) capable of communicating via a communication network with an application gateway (106) and at least one backend server (108), an application development environment hosted on said computing device and the connector of any one of claims 1 to 3.

## Patentansprüche

1. Verbindungseinrichtung, die konfiguriert ist zum Liefern einer Nachricht, die an einem Gateway-Server (118) von einer Anwendung empfangen wird, die auf einer drahtlosen Vorrichtung (102) ausgeführt wird, an einen aus einer Vielzahl von heterogenen Backend-Servern (108), wobei Liefererfordernisse für die Nachricht in einem schemabasierten Beschreibungsdokument definiert sind, das definiert ist in Übereinstimmung mit WSDL (Web Services Definition Language) und in Übereinstimmung mit einem Satz von vordefinierten Kriterien, die für die Verbindungseinrichtung spezifisch sind, wobei die Verbindungseinrichtung aufweist:
eine Backend-Verbindungseinrichtung (406) zum, in Reaktion auf einen Empfang einer Nachricht, Einkapseln der Nachricht in Übereinstimmung mit einem Binde-Protokoll, das durch das schemabasierte Beschreibungsdokument definiert ist unter Verwendung einer Erweiterbarkeit des WSDL-Bindeelements, durch Ersetzen eines Platzhalters in dem Schema durch Daten aus der empfangenen Nachricht; und
einen Transceiver, der konfiguriert ist zum Senden der eingekapselten Nachricht an den Backend-Server (108) in Übereinstimmung mit einem Verbindungsprotokoll, das durch das schemabasierte Beschreibungsdokument definiert ist;
wobei der Backend-Server (108) eine relationale Datenbank ist und das WSDL-Bindeelement ein Erweiterbarkeitselement umfasst, das eine Teilabfrage definiert, die einen Platzhalter enthält, die vervollständigt wird durch Ersetzen des Platzhalters mit Daten aus der Nachricht.

2. Verbindungseinrichtung gemäß Anspruch 1, wobei das Verbindungsprotokoll unter Verwendung einer Erweiterbarkeit des WSDL-Dienstelements definiert ist.

3. Verbindungseinrichtung gemäß Anspruch 2, wobei das WSDL-Dienstelement ein Erweiterbarkeitselement umfasst, das Verbindungskriterien definiert zum Verbinden der Verbindungseinrichtung mit der relationalen Datenbank, um die Abfrage einzureichen.

4. Gateway-Server (118), der konfiguriert ist zum Erleichtern einer Lieferung einer Nachricht, die von einer Anwendung empfangen wird, die auf einer drahtlosen Vorrichtung (102) ausgeführt wird, an einen aus einer Vielzahl von heterogenen Backend-Servern (108), wobei die Nachricht in einem schemabasierten Beschreibungsdokument definiert ist, das definiert ist in Übereinstimmung mit WSDL (Web Services Definition Language) und in Übereinstimmung mit einem Satz von vordefinierten Kriterien, wobei der Gateway-Server (118) aufweist:
eine Nachrichtenschnittstelle (232), die konfiguriert ist zum Empfangen von Nachrichten von der Anwendung und zum Senden von Nachrichten an die Anwendung; und
eine Verbindungseinrichtung (222) zum Kommunizieren mit dem Backend-Server (108), wobei die Verbindungseinrichtung aufweist:
eine Backend-Verbindungseinrichtung (406) zum, in Reaktion auf einen Empfang einer Nachricht, Einkapseln der Nachricht in Übereinstimmung mit einem Binde-Protokoll, das durch das schemabasierte Beschreibungsdokument definiert ist unter Verwendung einer Erweiterbarkeit des WSDL-Bindeelements, durch Ersetzen eines Platzhalters in dem Schema durch Zieldaten aus der empfangenen Nachricht, wobei die vordefinierten Kriterien für die Verbindungseinrichtung spezifisch sind; und
einen Transceiver, der konfiguriert ist zum Senden der eingekapselten Nachricht an den Backend-Server (108) in Übereinstimmung mit einem Verbindungsprotokoll, das durch das schemabasierte Beschreibungsdokument definiert ist;
wobei der Backend-Server (108) eine relationale Datenbank ist und das WSDL-Bindeelement ein Erweiterbarkeitselement umfasst, das eine Teilabfrage definiert, die einen Platzhalter enthält, die vervollständigt wird durch Ersetzen des Platzhalters mit Daten aus der Nachricht.

5. Gateway-Server (118) gemäß Anspruch 4, wobei das Verbindungsprotokoll unter Verwendung einer Erweiterbarkeit des WSDL-Dienstelements definiert ist.

6. Gateway-Server (118) gemäß Anspruch 5, wobei das WSDL-Dienstelement ein Erweiterbarkeitselement umfasst, das Verbindungskriterien definiert zum Verbinden des Gateway-Servers (118) mit der relationalen Datenbank, um die Abfrage einzureichen.

7. Gateway-Server (118) gemäß einem der Ansprüche 4 bis 6, wobei das schemabasierte Beschreibungsdokument vor einer Implementierung auf dem Gateway-Server (118) öffentlich verfügbar ist und potentiell sensitive Daten von dem schemabasierten Beschreibungsdokument getrennt sind und als privat geführt werden.

8. Gateway-Server (118) gemäß Anspruch 7, der weiter aufweist einen Zusammenführungsprozessor zum Zusammenführen der potentiell sensitiven Daten mit dem öffentlich verfügbaren schemabasierten Beschreibungsdokument zur Ausführung auf dem Gateway-Server (118).

9. Verfahren zum Erleichtern einer Lieferung einer Nachricht von einer Anwendung, die auf einer drahtlosen Vorrichtung (102) ausgeführt wird, an einen aus einer Vielzahl von heterogenen Backend-Servern (108) über eine Verbindungseinrichtung an einem Gateway-Server (118), wobei die Nachricht in einem schemabasierten Beschreibungsdokument definiert ist, das definiert ist in Übereinstimmung mit WSDL (Web Services Definition Language) und in Übereinstimmung mit einem Satz von vordefinierten Kriterien, die für die Verbindungseinrichtung spezifisch sind, wobei das Verfahren die Schritte aufweist:
Einkapseln der Nachricht in Übereinstimmung mit einem Binde-Protokoll, das durch das schemabasierte Beschreibungsdokument definiert ist unter Verwendung einer Erweiterbarkeit des WSDL-Bindeelements, durch Ersetzen eines Platzhalters in dem Schema durch Zieldaten aus der empfangenen Nachricht; und
Senden der eingekapselten Nachricht in Übereinstimmung mit einem Verbindungsprotokoll, das durch das schemabasierte Beschreibungsdokument definiert ist;
wobei der Backend-Server (108) eine relationale Datenbank ist und das WSDL-Bindeelement ein Erweiterbarkeitselement umfasst, das eine Teilabfrage definiert, die einen Platzhalter enthält, die vervollständigt wird durch Ersetzen des Platzhalters mit Daten aus der Nachricht.

10. Computerprogrammprodukt zur Erleichterung einer Kommunikation zwischen einer drahtlosen Anwendung und einem Backend-Server (108), wobei das Computerprogrammprodukt Programmcode aufweist, der durch einen Prozessor einer Computervorrichtung, System oder Einrichtung ausführbar ist zum Implementieren des Verfahrens gemäß Anspruch 9.

11. Kommunikationsinfrastruktur, die zumindest eine Computervorrichtung (102) aufweist, die über ein Kommunikationsnetzwerk mit einem Anwendungs-Gateway (106) und zumindest einem Backend-Server (108) kommunizieren kann, wobei eine Anwendungsentwicklungsumgebung auf der Computervorrichtung und der Verbindungseinrichtung gemäß einem der Ansprüche 1 bis 3 gehostet wird.

## Revendications

1. Connecteur configuré pour acheminer un message reçu à un serveur de passerelle (118) en provenance d'une application s'exécutant sur un dispositif sans fil (102) à un serveur d'une pluralité de serveurs dorsaux hétérogènes (108), les exigences de l'acheminement du message étant définies dans un document de description à l'aide d'un schéma défini conformément au Langage de Description de Services Web, dit langage WSDL, et conformément à un ensemble de critères prédéfinis spécifiques au connecteur, le connecteur comprenant :
un connecteur dorsal (406) répondant à la réception d'un message en encapsulant le message conformément à un protocole d'association défini par le document de description à l'aide d'un schéma en utilisant l'extensibilité de l'élément d'association WSDL par le remplacement d'un paramètre substituable dans le schéma par des données provenant du message reçu ; et
un émetteur-récepteur configuré pour transmettre le message encapsulé au serveur dorsal (108) conformément à un protocole de connexion défini par le document de description à l'aide d'un schéma ;
où le serveur dorsal (108) est une base de données relationnelle et l'élément d'association WSDL comporte un élément d'extensibilité définissant une requête partielle contenant un paramètre substituable qui est complétée par le remplacement du paramètre substituable par des données provenant du message.

2. Connecteur de la revendication 1, dans lequel le protocole de connexion est défini en utilisant l'extensibilité de l'élément de service WSDL.

3. Connecteur de la revendication 2, dans lequel l'élément de service WSDL comporte un élément d'extensibilité définissant des critères de connexion pour connecter le connecteur à la base de données relationnelle afin de soumettre la requête.

4. Serveur de passerelle (118) configuré pour faciliter l'acheminement d'un message reçu d'une application s'exécutant sur un dispositif sans fil (102) à un serveur d'une pluralité de serveurs dorsaux hétérogènes (108), le message étant défini dans un document de description à l'aide d'un schéma défini conformément au Langage de Description de Services Web, dit langage WSDL, et conformément à un ensemble de critères prédéfinis, le serveur de passerelle (118) comprenant :
une interface de message (232) configurée pour recevoir des messages provenant de l'application et pour lui transmettre des messages ; et
un connecteur (222) pour communiquer avec le serveur dorsal (108), le connecteur comprenant :
un connecteur dorsal (406) répondant à la réception d'un message en encapsulant le message conformément à un protocole d'association défini par le document de description à l'aide d'un schéma en utilisant l'extensibilité de l'élément d'association WSDL, par le remplacement d'un paramètre fictif dans le schéma par des données cibles provenant du message reçu où les critères prédéfinis sont spécifiques au connecteur ; et
un émetteur-récepteur configuré pour transmettre le message encapsulé au serveur dorsal (108) conformément à un protocole de connexion défini par le document de description à l'aide d'un schéma ;
où le serveur dorsal (108) est une base de données relationnelle et l'élément d'association WSDL comporte un élément d'extensibilité définissant une requête partielle contenant un paramètre fictif qui est complétée par le remplacement du paramètre fictif par des données provenant du message.

5. Serveur de passerelle (118) de la revendication 4, dans lequel le protocole de connexion est défini en utilisant l'extensibilité de l'élément de service WSDL.

6. Serveur de passerelle (118) de la revendication 5, dans lequel l'élément de service WSDL comporte un élément d'extensibilité définissant des critères de connexion pour connecter le serveur de passerelle (118) à la base de données relationnelle afin de soumettre la requête.

7. Serveur de passerelle (118) de l'une quelconque des revendications 4 à 6, dans lequel le document de description à l'aide d'un schéma est disponible au public avant la mise en oeuvre sur le serveur de passerelle (118) et des données potentiellement sensibles sont séparées du document de description à l'aide d'un schéma et maintenues comme données privées.

8. Serveur de passerelle (118) de la revendication 7, comprenant en outre un processeur de fusion pour la fusion des données potentiellement sensibles au document de description à l'aide d'un schéma disponible au public pour l'exécution sur le serveur de passerelle (118).

9. Procédé destiné à faciliter l'acheminement d'un message provenant d'une application s'exécutant sur un dispositif sans fil (102) à un serveur d'une pluralité de serveurs dorsaux hétérogènes (118) par l'intermédiaire d'un connecteur au niveau d'un serveur de passerelle (118), le message étant défini dans un document de description à l'aide d'un schéma défini conformément au Langage de Description de Services Web, dit langage WSDL, et conformément à un ensemble de critères prédéfinis spécifiques au connecteur, le procédé comprenant les étapes qui consistent :
à encapsuler le message conformément à un protocole d'association défini par le document de description à l'aide d'un schéma en utilisant l'extensibilité de l'élément d'association WSDL en remplaçant un paramètre substituable dans le schéma avec des données cibles provenant du message reçu ; et
à transmettre le message encapsulé conformément à un protocole de connexion défini par le document de description à l'aide d'un schéma ;
où le serveur dorsal (108) est une base de données relationnelle et l'élément d'association WSDL comporte un élément d'extensibilité définissant une requête partielle contenant un paramètre fictif qui est complétée par le remplacement du paramètre fictif par des données provenant du message.

10. Produit de programme informatique destiné à faciliter la communication entre une application sans fil et un serveur dorsal (108), le produit de programme informatique comprenant un code de programme exécutable par un processeur d'un dispositif, système ou appareil informatique pour la mise en oeuvre du procédé de la revendication 9.

11. Infrastructure de communication comprenant au moins un dispositif informatique (102) capable de communiquer par l'intermédiaire d'un réseau de communication avec une passerelle d'application (106) et au moins un serveur dorsal (108), un environnement de développement applicatif hébergé sur ledit dispositif informatique et le connecteur de l'une quelconque des revendications 1 à 3.
